# EUROPEAN PATENT APPLICATION

(11) **EP 2 326 058 A1**
(43) Date of publication of application: **25.05.2011**
(21) Application number: 09306128.1
(22) Date of filing: 23.11.2009
(51) Int. Cl.: H04L 29/06, H04Q 3/00

(54) **Method and device for translating IN protocol messages into SIP messages and vice versa**

(71) Applicant: Alcatel Lucent, 75008 Paris (FR)
(72) Inventor: Bultnick, Alain, 91620 Nozay (FR); Ballot, Jean-Marc, 91620 Nozay (FR); Capoen, Fabien, 91620 Nozay (FR)
(74) Representative: Chaffraix, Sylvain

(57) **Abstract**

A method is intended for translating messages exchanged between an equipment (E2) of a circuit switched network (PN), with Intelligent Network capabilities, and an IMS application server (AS1). This method comprises a step of translating:
- either a received IN protocol message into a SIP message able to be handled by this application server (AS1) and containing at least one additional dedicated SIP header and/or a dedicated new SIP message designed to adapt the behaviour of this application server (AS1) to facilities and/or constraints provided by the circuit switch network equipment (E2),
- or a received SIP message, coming from this application server (AS1), intended to the circuit switched network equipment (E2) and containing at least one additional dedicated SIP header designed to adapt the behaviour of this IMS application server (AS1) to facilities and/or constraints provided by this circuit switch network equipment (E2), into an I N protocol message.

## Description

The present invention relates to interworking between IMS ("IP Multimedia Subsystem") applications and legacy circuit switched (or CS) networks with Intelligent Network capabilities.

As it is known by the man skilled in the art, in legacy circuit switched networks, such as PSTNs ("Public Switched Telephone Networks") or some cellular (or mobile) networks, some services have been initially proposed and developed by private operators. This is notably the case of voice services which were developed by the operators LEX and TEX and which are handled by means of class 4/5 switches. So, introduction of new services was quite complicated for an operator as these switches were not based on open platforms and did not allow third party development.

In order to improve the situation, operators and manufacturers have contribute to define a more open architecture by introducing an "Intelligent Network layer" (or IN layer), capable of controlling the leg establishment operated by the (class 4/5) switches, above the "(class 4/5) switch layer". The platforms dedicated to the Intelligent Network layer offering a development environment, it was easier for operators to develop quickly new (voice) services without disturbing their legacy underlying switches. So, in fixed environment this led to the definition by the ITU of protocols such as INAP CS1 ("Intelligent Network Application Part - Capability Set 1") and INAP CS2 ("Intelligent Network Application Part - Capability Set 2"), and in mobile environment these protocols (INAP CS1 and INAP CS2) have been adapted to mobile specificities and led to the definition of CAMEL standards ("Customized Application for Mobile network Enhanced Logic") in GSM/3GPP environment. This new architecture of Intelligent Networks has enabled operators to develop and deploy new innovative services such as prepaid services or VPN/VPBx services for enterprises ("Virtual Private Network / Virtual PABx).

But with the development of Internet, some new IP ("Internet Protocol") services have appeared in public operator networks. This is notably the case of the voice over IP (VoIP). In order to support these new services a new standardized architecture called IMS ("IP Multimedia Subsystem") has emerged. IMS mimics the IN architecture by clearly separating the session layer from the application layer by means of the ISC ("IMS Service Control") interface, which is based on the protocol called SIP ("Session Initialization Protocol").

Due to the advantages offered by the IMS architecture, a lot of IMS applications should be proposed in the coming years, while in the same time the legacy environment should disappear slowly. So, operators will have to face with the development/maintenance of their own applications in the IN and IMS environments during a long time. But, it is also possible to develop/maintain applications in the IMS environment, and to use a standard gateway that interfaces IN and IMS environments, and more precisely performs translations of ISC messages (of the IMS environment) into INAP/CAP/WIND messages (of the legacy IN environment) and vice versa. Such a standard gateway is called R-IM-SSF gateway ("Reverse - IMS - Service Switch Function") in the literature (in reference to the IM-SSF function defined and standardized by the 3GPP organization and enabling deployment of legacy IN applications above the IMS session layer).

The proposed R-IM-SSF gateway has several drawbacks amongst which:
- it is incapable of controlling the setting of the so-called detection points that are used into the legacy IN environment by the class 4/5 switches for call control, because there is no SIP ISC parameter intended for positioning these detection points inside the underlying CS switch layer. To avoid impacts on the existing IMS application, it could be possible for the R-IM-SSF gateway to systematically position the dynamic detection points in "Request" mode. Indeed, this would allow the IMS voice application to be always on the path of the SIP INVITE transactions. But this would cause some burden in the legacy CS networks as the use of this systematic Request mode consumes too much CPU resources in class 4/5 switches and decreases their BHCA ("Busy Hour Call Attempt capacity") capability.
- when it is used for controlling an underlying voice call, there is a management conflict of the so-called "non answer" timer between the IMS application server and the underlying class 4/5 switches. In IMS environment, it is the application that must implement the "non answer" timer and that detects the non answer state. In CS environment, the IN application must rely on the underlying class 4/5 switch to ensure this facility, as it is the responsibility of the class 4/5 switch to arm the timer and detect the non answer state. In addition, the IN application can rely on the default switch timer value or override this default switch timer value through an appropriate command, but, due to the different paradigm for ensuring this feature in IMS environment, the ISC interface does not provide naturally the possibility to application to indicate such timer value to the underlying IMS session level;
- it is incapable of informing an IMS voice application about the underlying class 4/5 leg manipulation capabilities when an IMS voice application is deployed over a legacy CS network. Compared with IMS environment where all leg call manipulations are authorized by the underlying IMS SIP session layer, the class 4/5 switches can restrict this facility (for instance: CS2 authorizes complex leg manipulation at call establishment and during the call, allowing to develop sophisticated functions like "call by the top" or parallel ringing, and CS1 only authorizes restricted leg manipulation during the voice call establishment). There is no way on the ISC interface for the SIP IMS session layer to inform the application on what are the possible leg manipulation types.

So, the invention aims at overcoming at least one of the above mentioned drawbacks, and notably by introducing modifications into the SIP ISC interface to enable IMS applications to control efficiently underlying circuit switched (or CS) functions such as CS voice call establishment and release.

For this purpose, the invention provides a method, intended for translating messages exchanged between an equipment of a circuit switched network (with Intelligent Network capabilities) and an IP Multimedia Subsystem application server, hereafter called IMS application server, and comprising a step of translating:
- either a received IN protocol message into a Service Initiation Protocol message, hereafter called SIP message, able to be handled by this IMS application server and containing at least one additional dedicated SIP header and/or a dedicated new SIP message designed to adapt the behaviour of this IMS application server to facilities and/or constraints provided by the circuit switch network equipment,
- or a received SIP message, coming from this IMS application server, intended to the circuit switched network equipment and containing at least one additional dedicated SIP header designed to adapt the behaviour of this IMS application server to facilities and/or constraints offered by this circuit switch network equipment, into an IN protocol message.

The method according to the invention may include additional characteristics considered separately or combined, and notably :
- the IN protocol may be chosen amongst (at least) INAP, CAP and WIND ;
- its translation step may comprise translation of a received SIP ISC message, containing at least one additional dedicated SIP header intended for positioning at least one underlying class 4/5 dynamic detection point provided by the circuit switched network, into an IN protocol message, to allow the control of this underlying class 4/5 dynamic detection point by the IMS application server;
- its translation step may comprise translation, into an IN protocol message, of a received SIP ISC INVITE message containing at least one additional dedicated SIP header intended for signalling on the IN interface at least one underlying timer value to be set by the circuit switched network to detect a non response state for an associated called leg attempt to allow the IMS application server to override the underlying class 4/5 timer default value;
- its translation step may comprise translation of a received IN protocol message to be transmitted to the IMS application server into a new dedicated "client-error" SIP ISC answer message intended for signalling an underlying timeout detected by a class 4/5 switch on a called leg attempt;
- its translation step may comprise, when an IN protocol message is received, adding information about underlying class 4/5 switch capabilities into a SIP ISC INVITE sent to an IMS application server in an additional dedicated SIP header intended for signalling at least one underlying intelligent network capability of the circuit switched network;
➢ the underlying intelligent network capability may be a capability to carry out complex-leg manipulations or not.

The invention also provides a device, intended for translating:
- either an IN protocol message coming from an equipment of a circuit switched network (having Intelligent Network capabilities) and intended to an IMS application server, into a SIP message able to be handled by this IMS application server and containing at least one additional dedicated SIP header and/or a dedicated new SIP message designed to adapt the behaviour of this IMS application server to facilities and/or constraints provided by the circuit switch network equipment,
- or a received SIP message, coming from an IMS application server, intended to a circuit switched network equipment and containing at least one additional dedicated SIP header designed to adapt the behaviour of this IMS application server to facilities and/or constraints offered by the circuit switch network equipment, into an IN protocol message.

The device according to the invention may include additional characteristics considered separately or combined, and notably:
- it may be arranged for converting IN protocol messages that are chosen amongst (at least) INAP protocol messages, CAP protocol messages and WIND protocol messages;
- it may be arranged for translating a received SIP ISC message, containing at least one additional dedicated SIP header intended for positioning at least one underlying class 4/5 dynamic detection point provided by the circuit switched network, into an IN protocol message, to allow the control of this underlying class 4/5 dynamic detection point by the IMS application server;
- it may be arranged for translating, into an IN protocol message, a received SIP ISC INVITE message containing at least one additional dedicated SIP header intended for signalling on the IN interface at least one underlying timer value to be set by the circuit switched network to detect a non response state for an associated called leg attempt to allow the IMS application server to override the underlying class 4/5 timer default value;
- it may be arranged for translating a received IN protocol message to be transmitted to the IMS application server into a new dedicated "client-error" SIP ISC answer message intended for signalling an underlying timeout detected by a class 4/5 switch on a called leg attempt (and signalled into a previous SIP ISC INVITE call attempt sent by the IMS application server);
- it may be arranged, when an IN protocol message is received, for adding information about underlying class 4/5 switch capabilities into a SIP ISC INVITE sent to an IMS application server in an additional dedicated SIP header intended for signalling at least one underlying intelligent network capability of the circuit switched network;
➢ this underlying intelligent network capability may be a capability to carry out complex-leg manipulations or not.

The invention also provides an ISC interface, intended for being a part of a R-IM-SSF gateway, and comprising a device such as the one above introduced.

The invention also provides a R-IM-SSF gateway comprising an ISC interface such as the one above introduced.

The invention also provides an IP Multimedia Subsystem application server comprising a device such as the one above introduced.

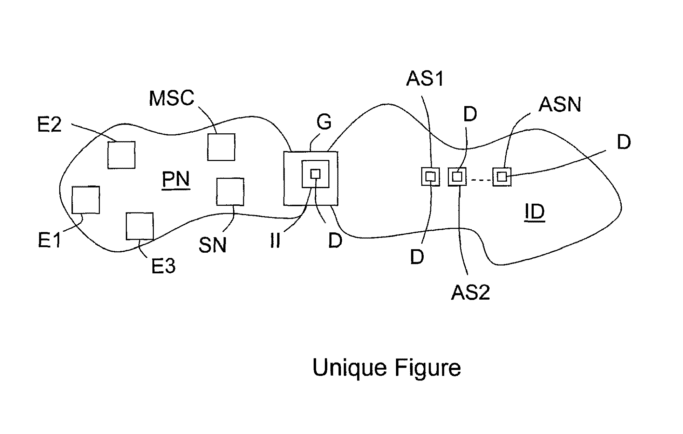

Other features and advantages of the invention will become apparent on examining the detailed specifications hereafter and the appended drawing, wherein the unique figure schematically illustrates a legacy circuit switched network coupled to an IMS domain through a R-IM-SSF gateway comprising an ISC interface equipped with a device according to the invention.

The appended drawing may serve not only to complete the invention, but also to contribute to its definition, if need be.

The invention aims at offering a method, and an associated device, intended for translating messages exchanged between equipments (Ei) of a circuit switched network (PN), with Intelligent Network (or IN) capabilities, and IP Multimedia Subsystem application servers (ASj), to allow these IP Multimedia Subsystem application servers (ASj) to control underlying Circuit Switch calls.

In the following description, and as illustrated in the unique figure, it will be considered that the IP Multimedia Subsystem application servers ASj (j = 1 to N), hereafter called IMS application servers, are part of an IMS domain (or network) ID. But the invention is not limited to this situation. Indeed, the IMS application servers ASj could belong to an operator which possesses only a legacy circuit switched (or CS) network PN with Intelligent Network (or IN) capabilities, but with no IMS network or domain.

Moreover in the following description, it will be considered that the legacy circuit switched network PN is a PSTN network. But the invention is not limited to this type of network. Indeed, the invention concerns any type of circuit switched network having Intelligent Network capabilities, and notably some cellular (or mobile) CS networks (or domain), such as GSM, for instance.

As it is schematically illustrated in the unique figure, the legacy PSTN (or circuit switched) network PN is coupled to the IMS domain ID through a Reverse - IMS - Service Switch Function gateway G, hereafter called R-IM-SSF gateway and which comprises an IMS Service Control interface II, hereafter called ISC interface and coupled to N IMS application servers ASj (j = 1 to N).

The invention proposes to implement a new method into the communication system illustrated in the unique figure in order to allow translation of i) IN protocol messages, coming from equipments Ei (here i = 1 to 3) of the legacy PSTN network PN (for instance class 4/5 nodes) and intended to IMS application servers ASj, into SIP messages, and ii) SIP messages, coming from IMS application servers and intended to equipments Ei of the legacy PSTN network PN, into IN protocol messages.

Such a method may be implemented, at least partly, by a device D located into the R-IM-SSF gateway G, and more preferably into the ISC interface II of this R-IM-SSF gateway G, or into an IMS application server ASj. But this is not mandatory. Indeed, the device D could be located into another network equipment, such as a Switching Control Point (or SCP) of the legacy PSTN network PN or in an IMS Call Session Control (or CSF) node.

Such a device D may be made of software modules, at least partly. But it could be also made of electronic circuit(s) or hardware modules, or a combination of hardware and software modules (in this case the device D comprises also a software interface allowing interworking between the hardware and software modules). In case where the device D is made of software modules it can be stored in a memory or in any readable computer software product.

The method according to the invention is implemented each time an equipment Ei of the legacy PSTN network PN is triggered by a detection point (or DP) to send an IN protocol message (which is translated and sent to an IMS application server ASj), or each time an IMS application server ASj has to send a message to an equipment Ei of the legacy PSTN network PN. For instance, this chosen application may be in charge of voice calls.

This method comprises a step consisting in translating:
- either a IN protocol message (which comes from an equipment Ei of the legacy PSTN network PN and has been received by the R-IM-SSF gateway G, in the described non limiting example, and which must be transmitted to a chosen IMS application server ASj) into a Service Initiation Protocol message, hereafter called SIP message,
- or a received SIP message (which comes from an IMS application server ASj and has been received by the R-IM-SSF gateway G, in the described non limiting example, and which must be transmitted to an equipment Ei of the legacy PSTN network PN) into an IN protocol message.

According to the invention, a SIP message is generated from a received IN protocol message according to a format which can be handled by the designated IMS application server ASj, and contains at least one additional dedicated SIP header and/or a dedicated new SIP message which is designed to adapt the behaviour of this designated IMS application server ASj to (IN service) facilities and/or constraints provided by the concerned equipment Ei.

In the same way, an IN protocol message is generated from a received SIP message (coming from an IMS application server ASj, intended to a circuit switched network equipment Ei and containing at least one additional dedicated SIP header designed to adapt the behaviour of this IMS application server to ASj to facilities and/or constraints offered by the circuit switch network equipment Ei), according to a format which can be handled by this designated circuit switch network equipment Ei. These translations are intended for allowing control of underlying Circuit Switch calls.

The device D is in charge of generating the SIP messages with one or more additional dedicated SIP headers and/or new SIP answer message. This device D can be arranged in order to translate IN protocol messages of the INAP type (used in fixed environment) and/or CAP or WIND type (used in cellular (or mobile) environment).

The method may be implemented in a lot of situations, and notably i) when an IMS application has to control the setting of a dynamic detection point (or DP) during a call establishment, ii) when a service offered by an IMS application implies an action because a called user does not answer a call, and iii) when a service offered by an IMS application requires underlying leg manipulations. These three situations will be described hereafter, as implementation examples of the method according to the invention.

To describe a first situation (i), one assumes that a user, whose equipment E2 is connected to the PSTN network PN, tries to establish a voice over IP (or VoIP) call with another user, and that the VolP application, which handles the VoIP calls, is stored into the first IMS application server AS1.

Firstly it is recalled that in an IMS ISC environment, the IMS application that handles a call for a calling user or a called user is always in the path of the whole underlying SIP INVITE transaction, both for calling user leg and called user leg.

It is also recalled that, when an Intelligent Network (or IN) voice application is triggered in a CS network PN during a call establishment phase for a calling user or a called user (by means of an "INIT DP message"), it can define with some granularity how it wants to participate to following call establishment release transactions through the positioning of dynamic detection points (by means of a Request Report Basic Call State Mode (or RRBCSM) message). In this case the IN application can indicate for each following dynamic detection point:
- "Answer" (during a call establishment phase - this corresponds to the "OK" message of a SIP INVITE transaction),
- "Disconnect" (leg 1) (during a call liberation phase - this corresponds to a "BYE" message initiated by a calling user),
- "Disconnect" (leg 2) (during a call liberation phase - this corresponds to a "BYE" message initiated by a called user),
- "Abandon" (leg 1) (during a call establishment phase - this corresponds to a "CANCEL" message initiated by a calling user),
- "Route Selection Failure" (during a call establishment phase - this corresponds to an "INVITE" message aborted by a CSCF layer),
- "Called Party Busy",
- "No Answer".

The IN application can also mention whether it wants to be only notified (i.e. a dynamic detection point set in "notified" mode) or be master for the continuation of the transaction (i.e. a dynamic detection point set in "request" mode).

Given that there is no SIP ISC parameter to position the detection points (DPs) inside the underlying CS switch layer, the method according to the invention proposes to add information into at least one additional dedicated SIP header in a received SIP ISC message. This additional dedicated SIP header is intended for enabling the IMS application server ASj to position at least one underlying class 4/5 dynamic detection point (DP) provided by the circuit switched network PN, to allow the control of this underlying class 4/5 dynamic detection point by this IMS application server ASj.

For instance, in the above described first situation (i), the IMS application server ASj, and for instance its associated device D, may generate a SIP INVITE ISC message containing a new SIP header called "IN-dynamic-DP-set". Such a new SIP header may have the following ABNF syntax (defined by the rule RFC 2234):
IN-dynamic-DP-set = "IN-dynamic-DP-set" HCOLON DP-Answer DP-Disconnect-leg1
DP-Disconnect-leg2 DP-Abandon DP-Route-selection-failure
DP-Called-Party-Busy DP-No-Answer
DP-Answer = "DP-Answer" "=" "Notified" / "Request"
DP-Disconnect-leg1 - "DP-Disconnect-leg1" "=" "Notified" / "Request"
DP-Disconnect-leg2 = "DP-Disconnect-leg2" "=" "Notified" / "Request"
DP-Abandon-leg1 = "DP-Abandon-leg1" "=" "Notified" / "Request"
DP-Route-Selection-Failure = "DP-Route-Selection-Failure " "=" "Notified" / "Request"
DP-Called-Party-Busy = "DP-Called-Party-Busy" "=" "Notified" / "Request"
DP-No Answer = "DP-No Answer " "=" "Notified" / "Request".

When the R-IM-SSF gateway G receives a SIP INVITE ISC message without such a new header IN-dynamic-DP-set from an IMS application server ASj, it may translate this message into an IN RRBCSM message with all the dynamic detection points positioned in "notified" mode. Else, if the R-IM-SSF gateway G receives a SIP INVITE ISC message with the new header IN-dynamic-DP-set from an IMS application server ASj, it may translate this message into an IN protocol message with dynamic detection points settings defined by the instructions contained into this received new header.

To describe a second situation (ii), one assumes that a user, whose equipment E2 is connected to the PSTN network PN, tries to establish a voice over IP (or VoIP) call with another user which does not want (or can not) answer to this call, and that the VolP application, which handles the VoIP calls, is stored into the first IMS application server AS1. This situation may occur at least when there is either a call forwarding on no answer (with a residential or VPBx (Virtual PABx) service), or a sequential ringing (with a VPBx service).

It is recalled that for realizing the two preceding services (call forwarding on no answer and sequential ringing) a timeout for the detection of a non answer condition must be setup in a class 4/5 network element (E1, E2 or E3 in the figure).

In the IMS ISC environment, the handling of the timer (scheduled with such a timeout) is the responsibility of the IMS application server ASj which serves the called user. If the IMS application server ASj wants to be triggered on the "non answer condition", it arms an internal timer when it sends a SIP ISC INVITE message to the called user. If this internal timer expires before reception of a SIP 200 OK message (originating from the called user), the "non answer condition" is detected by the IMS (VoIP) application, as defined by the 3GPP specifications TS 23.228 and 24.229 for the ISC SIP interface, and the more general rules defined in IETF RFC 3261 for SIP.

In the IN environment, the handling of the "non answer" timer is the responsibility of an underlying switch or node SN (or MSC), and the IN application has the possibility to override the default network value of this non answer timer. If the IN application wants to be triggered on the "non answer condition", it arms the underlying dynamic detection point "Answer" in the concerned switch SN to ask it to trigger the IN application when this non answer condition occurs. If the non answer timer expires in the switch SN (or MSC), the latter (SN) triggers the IN application through an ERBCSM ("Event Report of the Basic Call State Machine") CAP or INAP message, as defined in the 3GPP specifications TS 23.078 and 29.078 for CAP, or in the ETSI specifications ETS 300374 for INAP CS1 and ETS 301140 for INAP CS2.

Therefore, when the R-IM-SSF gateway G is used for controlling an underlying (voice) call, there is a conflict in the handling of the non answer timer between the IMS application server ASj and the underlying switch SN (or MSC). So, the method according to the invention proposes to solve this conflict by translating a received SIP message (for instance a SIP INVITE ISC message), containing at least one additional dedicated SIP header, into an IN protocol message. This additional dedicated SIP header is intended for allowing the circuit switched network to set at least one underlying timer value to detect a non response state for an associated called leg attempt, in order to allow it to override the underlying class 4/5 timer default value.

For instance, in the above described second situation (ii), the IMS application server ASj, and for instance its associated device D, may generate a SIP INVITE ISC message containing a new SIP header called "Timer-No-Answer". Such a new SIP header may have the following ABNF syntax (defined by the rule RFC 2234):
Timer-No-Answer = "Timer-No-Answer" "=" delta-seconds
delta-seconds = 1*(DIGIT).

The method according to the invention proposes also to translate a received IN protocol message (coming from an underlying class 4/5 equipment and indicating a time out detection for a call attempt) into a SIP message (for instance a SIP INVITE ISC message) containing at least one new dedicated "client-error" SIP ISC answer message (not yet defined in RFC 3261).

To describe a third situation (iii), one assumes that a user, whose equipment E2 is connected to the PSTN network PN, tries to establish a voice over IP (or VoIP) call with another user which requires leg manipulation(s), and that the VoIP application, which handles the VoIP calls, is stored into the first IMS application server AS1.

It is recalled that in case of INAP CS1 (in an IN fixed environment) and CAMEL phase 3 (in an IN mobile environment), the leg manipulation service offered is rather simple. Indeed, it authorizes the IN application (triggered by means of an "INIT_DP" message) to establish only one called user leg at a time through a "CONNECT" message or "CONNECT to RESOURCE" message. There is no possibility for the IN application to perform a calling user leg establishment, for instance to provide "Call by the Top" facilities (i.e. calls in which the calling leg and the called leg(s) are initiated by the IN application). This simple leg manipulation is sufficient for a large amount of voice application services, but some other ones, more sophisticated, are not possible (for instance, a Call by the Top is intended for establishing both calling user leg and called user leg from the IN layer, or a parallel ringing implies to simultaneously establish several called user legs, or else a call transfer facility implies to establish two called user legs in parallel and to handle the states of these legs).

It is also recalled that the ISC SIP interface II is, since the beginning of its definition, an interface that natively offers all sophisticated leg manipulations. So, an IMS application that acts as a "Back To Back" SIP application has the liberty to independently handle the calling user leg and the called user leg(s), for instance.

Therefore, when an IMS voice application is deployed over a legacy CS network PN, the ISC SIP interface II can not inform this IMS Voice application about the underlying leg manipulation capabilities of the session layer. So, the method according to the invention proposes to add (in SIP ISC INVITE messages to be transmitted to an IMS application server ASj) at least one additional dedicated SIP header intended for signalling at least one underlying intelligent network capability of the circuit switched network PN to this IMS application server ASj (and more precisely to its concerned voice application). For instance, the underlying intelligent network capability can be a capability to carry out complex-leg manipulations or not.

This new additional dedicated SIP header may also inform the voice application that a call is originating from an IN interface and that it will have to use each additional dedicated SIP header to control this call.

For instance, in the above described third situation (iii), the device D may generate a SIP INVITE ISC message containing a new SIP header called "IN-Capabilities". Such a new SIP header may have the following ABNF syntax (defined by the rule RFC 2234):
IN-Capabilities = "IN-Capabilities" "=" "complex-leg-manipulation" / "no complex-leg-manipulation".

It is important to note that the new additional dedicated SIP headers and the new answer messages (introduced by the invention) are only used/needed on the SIP ISC interfaces of the R-IM-SSF gateway G and not on other SIP interfaces defined between IMS CSCF nodes (network equipments or elements of the IMS domain ID). Therefore, these new additional dedicated SIP headers do not need to be propagated into the IMS environment.

The invention is not limited to the embodiments of method and device described above, only as examples, but it encompasses all alternative embodiments which may be considered by one skilled in the art within the scope of the claims hereafter.

## Claims

1. Method for translating messages exchanged between equipments (Ei) of a circuit switched network (PN), with Intelligent Network capabilities, and IP Multimedia Subsystem application servers (ASj), hereafter called IMS application server, **characterized in that** it comprises a step of translating:
- either a received IN protocol message into a SIP message able to be handled by an IMS application server (ASj) and containing at least one additional dedicated SIP header and/or a dedicated new SIP message designed to adapt the behaviour of said IMS application server (ASj) to facilities and/or constraints provided by a circuit switch network equipment (Ei),
- or a received SIP message, coming from an IMS application server (ASj), intended to a circuit switched network equipment (Ei) and containing at least one additional dedicated SIP header designed to adapt the behaviour of said IMS application server (ASj) to facilities and/or constraints offered by said circuit switch network equipment (Ei), into an IN protocol message.

2. Method according to claim 1, **characterized in that** said IN protocol is chosen from a group comprising at least INAP, CAP and WIND.

3. Method according to one of claims 1 and 2, **characterized in that** said translation step comprises translation of a received SIP ISC message, containing at least one additional dedicated SIP header intended for positioning at least one underlying class 4/5 dynamic detection point provided by the circuit switched network (PN), into an IN protocol message, to allow the control of this underlying class 4/5 dynamic detection point by said IMS application server (ASj).

4. Method according to one of claims 1 to 3, **characterized in that** said translation step comprises translation, into an IN protocol message, of a received SIP ISC INVITE message containing at least one additional dedicated SIP header intended for signalling on an IN interface at least one underlying timer value to be set by said circuit switched network (PN) to detect a non response state for an associated called leg attempt to allow said IMS application server (ASj) to override the underlying class 4/5 timer default value.

5. Method according to one of claims 1 to 4, **characterized in that** said translation step comprises translation of a received IN protocol message to be transmitted to said IMS application server (ASj) into a new dedicated "client-error" SIP ISC answer message intended for signalling an underlying timeout detected by a class 4/5 switch (Ei) on a called leg attempt.

6. Method according to one of claims 1 to 5, **characterized in that** said translation step comprises, when an IN protocol message is received, adding information about underlying class 4/5 switch capabilities into a SIP ISC INVITE sent to an IMS application server (ASj) in an additional dedicated SIP header intended for signalling at least one underlying intelligent network capability of said circuit switched network (PN).

7. Method according to claim 6, **characterized in that** said underlying intelligent network capability is a capability to carry out complex-leg manipulations or not.

8. Device (D) for translating messages exchanged between equipments (Ei) of a circuit switched network (PN), with Intelligent Network capabilities, and at least one IP Multimedia Subsystem application server (ASj), hereafter called IMS application server, **characterized in that** it is arranged for translating:
- either an IN protocol message coming from an equipment of said circuit switched network (PN), having Intelligent Network capabilities, and intended to an IMS application server (ASj), into a SIP message able to be handled by said IMS application server (ASj) and containing at least one additional dedicated SIP header and/or a dedicated new SIP message designed to adapt the behaviour of said IMS application server (ASj) to facilities and/or constraints provided by a circuit switch network equipment (Ei),
- or a received SIP message, coming from an IMS application server (ASj), intended to a circuit switched network equipment (Ei) and containing at least one additional dedicated SIP header designed to adapt the behaviour of said IMS application server (ASj) to facilities and/or constraints offered by said circuit switch network equipment (Ei), into an IN protocol message.

9. Device according to claim 8, **characterized in that** it is arranged for converting IN protocol messages that are chosen from a group comprising at least INAP protocol messages, CAP protocol messages and WIND protocol messages.

10. Device according to one of claims 8 and 9, **characterized in that** it is arranged for translating a received SIP ISC message, containing at least one additional dedicated SIP header intended for positioning at least one underlying class 4/5 dynamic detection point provided by said circuit switched network (PN), into an IN protocol message, to allow the control of this underlying class 4/5 dynamic detection point by said IMS application server (ASj).

11. Device according to one of claims 8 to 10, **characterized in that** it is arranged for translating, into an IN protocol message, a received SIP ISC INVITE message containing at least one additional dedicated SIP header intended for signalling on an IN interface at least one underlying timer value to be set by said circuit switched network (PN) to detect a non response state for an associated called leg attempt to allow said IMS application server (ASj) to override this underlying class 4/5 timer default value.

12. Device according to one of claims 8 to 11, **characterized in that** it is arranged for translating a received IN protocol message to be transmitted to said IMS application server (ASj) into a new dedicated "client-error" SIP ISC answer message intended for signalling an underlying timeout detected by a class 4/5 switch (Ei) on a called leg attempt.

13. Device according to one of claims 8 to 12, **characterized in that** it is arranged, when an IN protocol message is received, for adding information about underlying class 4/5 switch capabilities into a SIP ISC INVITE sent to an IMS application server (ASj) in an additional dedicated SIP header intended for signalling at least one underlying intelligent network capability of said circuit switched network (PN).

14. Device according to claim 13, **characterized in that** said underlying intelligent network capability is a capability to carry out complex-leg manipulations or not.

15. IP Multimedia Subsystem Service Control interface (II) for a R-IM-SSF gateway (G), **characterized in that** it comprises a device (D) according to one of claims 8 to 14.

16. R-IM-SSF gateway (G), **characterized in that** it comprises an IP Multimedia Subsystem Service Control interface (II) according to claim 15.

17. IP Multimedia Subsystem application server (ASj), **characterized in that** it comprises a device (D) according to one of claims 8 to 14.
